# EUROPEAN PATENT SPECIFICATION

(11) **EP 3 495 126 B1**
(45) Date of publication and mention of the grant of the patent: **04.08.2021**
(21) Application number: 18210590.8
(22) Date of filing: 05.12.2018
(51) Int. Cl.: B29C 48/21, C08J 5/18

(54) **PROCESS FOR EXTRUSION OF A FILM BASED ON THERMOPLASTIC MATERIAL**
VERFAHREN ZUM EXTRUDIEREN EINES FILMS BASIEREND AUF THERMOPLASTISCHEM MATERIAL
PROCÉDÉ D'EXTRUSION D'UN FILM À BASE DE MATIÈRE THERMOPLASTIQUE

(30) Priority: 05.12.2017 IT 201700140383
(43) Date of publication of application: 12.06.2019
(73) Proprietor: Point Plastic S.r.l., 03012 Anagni (FR) (IT)
(72) Inventor: SEVERINI, Tonino, 03012 Anagni (FR) (IT); SEVERINI, Luca, 03012 Anagni (FR) (IT)
(74) Representative: Bosman, Cesare

(56) References cited:
- EP-A1- 0 422 282
- EP-A1- 1 024 169
- EP-A1- 2 365 018
- WO-A1-93/08226
- JP-A- 2003 096 175
- J Scheirs: "Additives for the Modification of Poly(Ethylene Terephthalate) to Produce Engineering-Grade Polymers" In: "Modern Polyesters: Chemistry and Technology of Polyesters and Copolyesters", 1 January 2003 (2003-01-01), John Wiley & Sons, Ltd, XP055156173, DOI: 10.1002/0470090685.ch14, * page 499, last paragraph - page 501, last paragraph; table 14.2 *
- AWAJA F ET AL: "RECYCLED POLY(ETHYLENE TEREPHTHALATE)CHAIN EXTENSION BY A REACTIVE EXTRUSION PROCESS", POLYMER ENGINEERING AND SCIENCE, BROOKFIELD CENTER, US, vol. 44, no. 8, 1 August 2004 (2004-08-01) , pages 1579-1587, XP001220911, ISSN: 0032-3888, DOI: 10.1002/PEN.20155
- PET RECYCLING ET AL: "Cast Film Technology Cast Film Technology for Processing of Recycled PET for Processing of Recycled PET", FORUM, 12 February 2008 (2008-02-12), XP055478899,
- BRENO HEINS BIMESTRE ET AL: "Chain extension of poly (ethylene terephthalate) by reactive extrusion with secondary stabilizer", MATERIALS RESEARCH, vol. 15, no. 3, 1 June 2012 (2012-06-01), pages 467-472, XP055266163, BR ISSN: 1516-1439, DOI: 10.1590/S1516-14392012005000058

## Description

### CROSS-REFERENCE TO RELATED APPLICATIONS

This patent application claims priority from Italian patent application no. 102017000140383 filed on 05/12/2017.

### TECHNICAL FIELD

The present invention concerns a process for the production by extrusion of a film based on thermoplastic material with improved mechanical characteristics.

### BACKGROUND ART

For some time now, the importance of PET packaging has been increasing. In fact, in addition to bottles, PET packaging is now routinely used also for the production of trays. The characteristics that make PET an extremely adapt material for this type of packaging are summarized below:
- High transparency;
- Good balance of mechanical and gas barrier properties;
- Availability of raw material, both recycled and virgin;
- Possibility of using recycled materials;
- Low environmental impact;
- Optimal recycling of the material after use by the consumer.

The multilayer film for the production of packaging is usually composed of an A-B-A type structure, in which the two layers A constitute 10-20% by weight of the structure and are made of virgin PET, while the central layer B makes up 80-90% by weight of the structure and is produced with a high percentage of material originating from after-use bottle recycling and/or thermoforming waste from within the production plant.

In particular, while the virgin PET has an intrinsic viscosity (IV) around 0.80dl/g, the PET deriving from the recycled bottles and the PET deriving from recycling within the production plant have an IV of approximately 0.76 dl/g and approximately 0.60dl/g respectively.

The films of the multilayer sheet are generally produced using single-screw or twin-screw extruders equipped with air drying systems or vacuum drying systems, respectively. Said plants have flat-head dies and successive cold calendering systems designed to manage polymer viscosity intervals below 0.78 dl/g.

These plants, due to the formulations and mixtures of polymers generally used, produce films which for the most part have an intrinsic viscosity below 0.64 dl/g. Said value significantly deteriorates when the film formulations also comprise carbon black or titanium dioxide to give the film a black or white colouring, respectively.

EP2365018A1 relates to a method of manufacturing sheet for food containers, which comprises: adding a chain extender to moist flakes of recovered PET; charging the flakes of recovered PET containing the chain extender into an extruder having two or more vent holes, melting and kneading the flakes of recovered PET with sucking to degas through the vent holes, while molecular chains of the recovered PET of which the molecular weight has been lowered are bonded to each other by the chain extender to render the molecular weight higher, and simultaneously, ethylene glycol and acetaldehyde, produced during depolymerization by water and heat, are trapped by the chain extender to remove residual aldehydes; and extruding the recovered PET from the extruder into sheet.

As is known to a person skilled in the art, the lower the intrinsic viscosity of the film, the worse the mechanical characteristics of the resulting article.

In said regard, it is known that the mean of the viscosities of the starting materials is always higher than the mean viscosity of the relative extruded film. The reduction in viscosity is necessarily caused by a thermal degradation effect in addition to a hydrolytic degradation effect which occurs in transformation of the PET which requires process temperatures near to 300°C for longer than 4-5 minutes.

For a more complete understanding of this problem it should be noted that, for obvious economic reasons, the trend of manufacturers is to progressively increase the level of recycled materials, or in any case less noble materials also containing higher levels of impurity (nylon, EVOH, PE) than the prime quality grades. It should also be remembered that in the near future the availability of waste from PET trays recovered by the after-use recycling system will considerably increase. The more the use of these materials increases, the lower the intrinsic viscosity of the extruded film will be and the worse the mechanical properties of the resulting article.

In the industry the need was therefore felt for the use of an increasingly higher quantity of recycled material without compromising the mechanical characteristics of the finished article. In other words, the need was felt for the use of materials with a low intrinsic viscosity (recycled material) while simultaneously maintaining the mechanical properties of the extruded film and resulting trays at the levels of those of the virgin PET or in any case of the high quality recycled starting materials.

In fact, in the case of the trays it is very important to be able to guarantee that they reach the consumer without breaking during the various stages of production, filling, transport and final use. The breakage of a tray could cause, for example, deterioration of the product contained therein, in addition to the loss of miniature fractions of polymer which could end up in the food product and, therefore, be swallowed by the consumer.

In the production of foamed products made of PET without recycled materials, the use of pyromellitic dianhydride (PMDA) in order to increase the intrinsic viscosity of the PET has been known for some time. Said need derives from the fact that the PET foaming process requires rheological properties far superior to those of the standard PET typically used in the injection and blow-moulding process typical of the production of preforms and bottles.

In the sector of the production of A-PET film for flat-head extrusion for thermoforming application, it was a widely held opinion that the use of PMDA was inadvisable as it was believed to cause an increase in the viscosity such as to compromise the extrusion process.

The inventors of the present invention have surprisingly found that the addition of PMDA to recycled PET in particular conditions, entails a significant improvement in the mechanical properties, without thereby compromising the extrusion process due to a high viscosity.

### DISCLOSURE OF INVENTION

The subject of the present invention is a process for the production by extrusion of a multilayer film composed of at least three layers of which two outer layers consist of virgin PET or a virgin copolymer thereof ; an inner layer of said multilayer film being produced by the sequence of:
- a mixing step, wherein recycled PET material is mixed with an additive to obtain a thermoplastic material to be extruded; said recycled PET material having an intrinsic viscosity lower than 0.80 dl/g, deriving, for at least 50% by weight, from recycling processes and comprising PET or a copolymer thereof;
- an extrusion step, wherein said thermoplastic material undergoes extrusion at a temperature lower than 300°C;
- a recovery and cooling step, wherein a film coming out of the extruder is recovered and cooled;
said additive being pyromellitic dianhydride;
said process being characterized in that said pyromellitic dianhydride is added in a quantity ranging from 0.002% to 0.150% by weight with respect to the total weight of said thermoplastic material to be extruded; said film multilayer coming out of the extruder having an intrinsic viscosity lower than weighted intrinsic viscosity of incoming PET material.

Here and in the following by copolymer of the PET we mean a material obtained by copolymerization with bifunctional alcohols having molecular weight higher than ethylene glycol, or with isomers of terephthalic acid.

Preferably, the thermoplastic material is composed of PET or a copolymer thereof deriving, at least 80% by weight, from recycling processes. Even more preferably, the thermoplastic material is composed of PET or a copolymer thereof deriving entirely from recycling processes.

Preferably, the copolymer of the PET comprises as comonomer diethylene glycol (DEG) and/or cyclohexanedimethanol (CHDM) and/or isophthalic acid (IPA) and/or naphthalenic acid (NDC).

Preferably, the pyromellitic dianhydride is in a quantity ranging from 0.03 to 0.15% by weight relative to the total weight of thermoplastic material.

Preferably, said recycled PET material has an intrinsic viscosity ranging from 0.5 to 0.78 dl/g.

Preferably, said thermoplastic material comprises an inorganic filler and/or an organic filler and/or polymers different from PET or from a copolymer thereof.

Preferably, said mixing step comprises a first mixing operation in which said pyromellitic dianhydride is mixed with a polymeric matrix or a support liquid obtaining a mixture with a high concentration of pyromellitic dianhydride, and a second mixing operation in which said mixture with high concentration of pyromellitic dianhydride is mixed with said recycled PET material to obtain the thermoplastic material to be extruded.

Preferably, the two outer layers constitute 5 to 20% by weight of the total weight of the multilayer film, and the inner layer constitutes 80 to 95% by weight of the total weight of the multilayer film.

A further subject of the present invention is an article comprising the multilayer film subject of the present invention.

Preferably, the article comprising the multilayer film is a tray or container produced by means of the film thermoforming process.

### BEST MODE FOR CARRYING OUT THE INVENTION

Embodiment examples are provided below purely by way of nonlimiting example.

Four comparison examples were produced (Ex. 1 - Ex. 4) featuring a layer with material coming from recycling processes but without the presence of PMDA.

Two sets of examples were produced according to the invention (Ex. 5 - Ex. 8 and Ex. 10 - Ex. 13), each of which uses the same polymer composition as Ex. 1 and Ex. 4 respectively, using different quantities of PMDA.

Two comparison examples were produced (Ex. 9 and Ex. 14), each of which uses the polymer composition of the two sets of examples of the invention respectively but using a quantity of PMDA equal to 0.2% by weight. Lastly, a further example was produced according to the invention (Ex. 15), in which inorganic fillers and dyes were added to the composition of the example Ex. 13.

The preparation methods of the layers of the examples given here are described below.

### Extrusion method for preparation of the A/B/A multilayer film

Temperatures of the main extruder screw for production of the central layer (B): T1 260°C/T2 270°C/T3 280°C/T4 280°C/T5 280°C/T6 280°C/T7 280°C/ T pump 280°C/ T filter 280°C/T die 275°C/ T calender rollers 35°C/ residual vacuum level in degassing units 1 and 2 are 33 and 29 mbar respectively/ polymer flow rate 100 kg/h; screw revolutions 121 rpm.

Temperatures of the coex secondary extruder screw for production of the outer layers (A): T1 255°C/T2-T3-T4-T5-T6 280°C/ residual vacuum level in degassing: 22 mbar/polymer flow rate 11 kg/h; screw revolutions 18 rpm.

### Method for preparation of masterbatch comprising PMDA

The dosage of the PMDA (Shandong Elishi Company) for the quantities required by the experimentation is extremely low, hence a polymer masterbatch has to be produced containing a fairly high quantity of PMDA to be able to then dose a granule containing the PMDA in the required concentrations. In fact, it is common practice to produce polymer masterbatches or liquid solutions which "transport" the active ingredient to be then dosed in the process as accurately as possible.

In this specific case a masterbatch is prepared containing 5% of PMDA (Shandong Elishi Company grade purity >99%) carried on a polymer base of Co-PET having a melting point of 215°C.

The operating procedure for the production of said Masterbatch entails a step of drying the Co-PET at 140°C for 5 hours in dry air having a DEW point of -40°C. After drying, the material is dosed gravimetrically in a 25 mm LEISTRITZ corotating twin-screw extruder which melts and mixes the polymer with the PMDA which is also dosed gravimetrically in the order of 5% by weight with respect to the Co-PET matrix. The thermal profile of the extruder used for the test was the following: Temperature 1: 210°C; T2 225°C; T3: 225°C, T4 225°C; T5 225°C, T die 220°C. Extruder screw rotations 225 rpm. Extruder total flow rate 10 kg/h. Co-PET flow rate 9.5 kg/h; PMDA flow rate 0.5 kg/h. Once cooled and extruded, the material is cooled in cold water at 10°C and then dried and cut into granules.

### Example 1 (comparison)

### Production of a three-layer PET film

A film composed of 3 layers was produced, of which the central layer (B) is composed of PET bottle flakes (PETALO DENTIS grade A) having IV 0.75 dl/g and the two side layers (A) composed of virgin PET with IV 0.80 dl/g (PPK Plastipack Italia) to form an A/B/A structure. The material was fed to the extruders without preliminary drying. This was done during the production process with the aid of the extruder degassing areas which allow removal of the humidity present in the PET, guaranteeing good maintenance of the final IV.

### Example 2 (comparison)

### Production of a film with 50% recycled PET and 50% thermoforming waste in the central layer

Example 2 was carried out in the same operating conditions as example 1 but using, for production of the central layer of the film, a mixture composed of 50% PET flakes from the recycling circuit (PETALO DENTIS grade A) and 50% internal thermoforming waste having intrinsic viscosity of 0.600 dl/g.

The flakes and the thermoformed waste are both transparent.

### Example 3 (comparison)

### Production of a film with 25% recycled PET and 75% thermoforming waste in the central layer

Example 3 was carried out in the same operating conditions as example 1 but using, for production of the central layer of the film, a mixture composed of 25% PET flakes from the recycling circuit (PETALO DENTIS grade A) and 75% internal thermoforming waste having an intrinsic viscosity of 0.600 dl/g.

The flakes and the thermoformed waste are both transparent.

### Example 4 (comparison)

### Production of a film with 100% thermoforming waste in the central layer

Example 4 was carried out in the same operating conditions as example 1 but using, for production of the central layer of the film, a mixture composed of 100% internal thermoforming waste having an intrinsic viscosity of 0.600 dl/g.

The flakes are transparent.

### EXAMPLE 5 (invention)

Example 5 was carried out in the same operating conditions as example 1 but adding, in the central layer, a concentration of PMDA equal to 0.005% by weight of the polymer.

The flakes used are transparent.

### EXAMPLE 6 (invention)

Example 6 was carried out in the same operating conditions as example 1 but adding, in the central layer, a concentration of PMDA equal to 0.03% by weight of the polymer.

The flakes used are transparent.

### EXAMPLE 7 (invention)

Example 7 was carried out in the same operating conditions as example 1 but adding, in the central layer, a concentration of PMDA equal to 0.08% by weight of the polymer.

The flakes used are transparent.

### EXAMPLE 8 (invention)

Example 8 was carried out in the same operating conditions as example 1 but adding, in the central layer, a concentration of PMDA equal to 0.15% by weight of the polymer.

The flakes used are transparent.

### EXAMPLE 9 (comparison)

Example 9 was carried out in the same operating conditions as example 1 but adding, in the central layer, a concentration of PMDA equal to 0.20% by weight of the polymer.

The film is very difficult to extrude due to the high viscosity of the polymer in the molten state.

The flakes used are transparent.

### EXAMPLE 10 (invention)

Example 10 was carried out in the same operating conditions as example 4 but adding, in the central layer, a concentration of PMDA equal to 0.005% by weight of the polymer.

The (thermoformed)flakes used are transparent.

### EXAMPLE 11 (invention)

Example 11 was carried out in the same operating conditions as example 4 but adding, in the central layer, a concentration of PMDA equal to 0.03% by weight of the polymer.

The (thermoformed) flakes used are transparent.

### EXAMPLE 12 (invention)

Example 12 was carried out in the same operating conditions as example 4 but adding, in the central layer, a concentration of PMDA equal to 0.08% by weight of the polymer.

The (thermoformed) flakes used are transparent.

### EXAMPLE 13 (invention)

Example 13 was carried out in the same operating conditions as example 4 but adding, in the central layer, a concentration of PMDA equal to 0.15% by weight of the polymer.

The (thermoformed) flakes used are transparent.

### EXAMPLE 14 (comparison)

Example 14 was carried out in the same operating conditions as example 4 but adding, in the central layer, a concentration of PMDA equal to 0.20% by weight of the polymer.

The film is very difficult to extrude due to the high viscosity of the polymer in the molten state.

The flakes used are transparent.

### EXAMPLE 15 (invention)

Example 15 was carried out in the same operating conditions as example 11 but adding, in the central layer, in addition to 0.15% of PMDA, also 3% of LDPE (BASELL MFI 12) and 1% of covering black colour (Point Plastic - Black 112) and 1% of BASO4 (GARZANTI SACHTOSPHERE AB-TM) on the weight of the polymer.

The (thermoformed) flakes used are transparent.

All the films produced in the above examples have a thickness of 400 µm.

Each of the films produced according to the above examples were characterized by means of the measurement methods given below.

Measurement methods:
- Intrinsic viscosity: ASTM D 4603-86
- Opalescence measurement (HAZE): ASTM-D-1003
- TENSILE TEST measurement: ASTM D882
- Impact tests: ASTM D 1709-B
- DSC (crystallization) analysis: ISO 113557

Table I contains the results of the characterization tests and the characteristics of the individual films.

**TABLE I**

| Characteristics/ Unit of measurement | EX.1 Comp. | EX.2 Comp. | EX. 3 Comp. | EX.4 Comp. | EX. 5 | EX.6 | EX.7 | EX.8 | EX.9 Comp. | EX 10 | EX.11 | EX.12 | EX.13 | EX.14 Comp. | EX.15 |
|---|---|---|---|---|---|---|---|---|---|---|---|---|---|---|---|
| Weighted IV of incoming PET materials (dl/g) | 0,764 | 0,692 | 0,65 | 0,63 | 0,764 | 0,764 | 0,764 | 0,764 | 0,764 | 0,63 | 0,63 | 0,63 | 0,63 | 0,63 | 0,63 |
| Mixture extrudibility | ok | ok | ok | ok | ok | 0k | ok | ok | Non ok | ok | ok | ok | ok | Non ok | ok |
| IV film (dl/g) | 0,632 | 0,609 | 0,598 | 0,564 | 0,665 | 0,656 | 0,678 | 0,692 | 0,723 | 0,587 | 0,598 | 0,609 | 0,619 | 0,636 | 0,60 |
| Δ IV (dl/g) | -0,132 | -0,083 | -0,052 | -0,066 | -0,1 | -0,108 | -0,086 | -0,072 | -0,041 | -0,043 | -0,022 | -0,011 | -0,01 | +0,016 | -0,02 |
| Haze (%) | 3,1 | 2,9 | 2,9 | 3,2 | 3,2 | 3,0 | 3,1 | 2,8 | 3,1 | 3,3 | 3,4 | 3,5 | 3,3 | 3 | opaco |
| Film elongation test Max load (N) | 588 | 563 | 533 | 511 | 621 | 645 | 663 | 699 | -- | 530 | 535 | 546 | 554 | -- | 538 |
| Dart drop test film Forza (N) | 246 | 224 | 201 | 199 | 280 | 278 | 298 | 301 | -- | 238 | 256 | 264 | 272 | -- | 259 |
| Dart drop test Film energy absorbed (J) | 2,052 | 1,960 | 1,860 | 1,730 | 3,80 | 3,66 | 3,88 | 3,94 | -- | 1,99 | 2,11 | 2,45 | 289 | -- | 2,10 |
| Manual breakage test (broken trays/10 samples) | 1/10 | 2/10 | 4/10 | 6/10 | 0/10 | 0/10 | 0/10 | 0/10 | -- | 0/10 | 0/10 | 0/10 | 0/10 | -- | 0/10 |

From the values given in Table I it can be seen that for the first four comparison examples (Ex.1-Ex.4) the intrinsic viscosity of the extruded films is always below the weighted mean of the viscosities of the formulation component materials. This phenomenon is due both to the type of process used for production of the film and the type of recycled materials used. Consequently, the mechanical properties of the film (tensile strength tests and impact resistance tests) decrease proportionally to the decrease in intrinsic viscosity, reaching values that jeopardize its use in the production of trays.

The results relative to the first (Ex.5-Ex.8) and the second (Ex.10-Ex.13) series of examples according to the invention clearly show that the presence of PMDA has a particularly positive effect in terms of mechanical properties in the presence of an extremely limited recovery of intrinsic viscosity.

In particular, it should be highlighted that the clear improvement in terms of tensile strength and impact resistance reflect directly on the results of the breakage tests on the relative trays.

The values relative to the comparison examples Ex.9 and Ex.14 unquestionably show that the use of PMDA in a quantity greater than or equal to 0.2% by weight compromises the extrusion operations, thus jeopardizing production of the layer and the quality of the final film. In fact, it has been experimentally ascertained that for this example, extrusion of the material presents flow lines that cannot be managed by the die and the cooling calenders, consequently impoverishing the aesthetic and optical qualities of the extruded film.

It has been surprisingly found that when the PMDA is added in the conditions indicated in the claims, its presence very markedly influences the mechanical characteristics without causing the expected increase in intrinsic viscosity and thus allowing an effective extrusion operation. In other words, it has been surprisingly found that in the extrusion processes, unlike the prejudice up to now present in the field, the addition of PMDA can achieve improvements in terms of mechanical properties without, therefore, entailing the expected rise in intrinsic viscosity which would have negatively affected the extrusion process.

In fact, the values shown in Table I highlight that the intrinsic viscosity of the film produced is however lower than the intrinsic viscosity of the starting material.

Lastly, the results relative to the last example of the invention Ex.15 show that it is possible to obtain excellent results also in the presence of colour and/or organic fillers and other polymers like, for example, LDPE.

## Claims

1. A process for the production by extrusion of a multilayer film composed of at least three layers of which two outer layers consist of virgin PET or a virgin copolymer thereof ; an inner layer of said multilayer film being produced by the sequence of:
- a mixing step, wherein recycled PET material is mixed with an additive to obtain a thermoplastic material to be extruded; said recycled PET material having an intrinsic viscosity, measured according to ASTM D 4603-86, lower than 0.80 dl/g, deriving, for at least 50% by weight, from recycling processes and comprising PET or a copolymer thereof;
- an extrusion step, wherein said thermoplastic material undergoes extrusion at a temperature lower than 300°C;
- a recovery and cooling step, wherein a film coming out of the extruder is recovered and cooled;
said additive being pyromellitic dianhydride;
said process being **characterized in that** said pyromellitic dianhydride is added in a quantity ranging from 0.002% to 0.150% by weight with respect to the total weight of said thermoplastic material to be extruded; said film multilayer coming out of the extruder having an intrinsic viscosity, measured according to ASTM D 4603-86, lower than weighted intrinsic viscosity of incoming PET material.

2. The process according to claim 1, **characterized in that** the thermoplastic material consists of PET or of a copolymer thereof deriving, at least for 80% by weight, from recycling processes.

3. The process according to claim 1, **characterized in that** the thermoplastic material consists of PET or a copolymer thereof deriving entirely from recycling processes.

4. The process according to one of the preceding claims, **characterized in that** the PET copolymer comprises, as comonomer, diethylene glycol (DEG) and/or cyclohexanedimethanol (CHDM) and/or isophthalic acid (IPA) and/or naphthalene acid (NDC).

5. The process according to one of the preceding claims, **characterized in that** the pyromellitic dianhydride is in a quantity ranging from 0.03 to 0.15% by weight with respect to the total weight of thermoplastic material.

6. The process according to one of the preceding claims, **characterized in that** said recycled PET material has an intrinsic viscosity, measured according to ASTM D 4603-86, ranging from 0.5 to 0.78 dl/g.

7. The process according to one of the preceding claims, **characterized in that** said thermoplastic material comprises an inorganic filler and/or an organic filler and/or polymers different from PET or from a copolymer thereof.

8. The process according to one of the preceding claims, **characterized in that** said mixing step comprises
- a first mixing operation wherein said pyromellitic dianhydride is mixed with a polymer matrix or a support liquid obtaining a mixture with a high concentration of pyromellitic dianhydride, and
- a second mixing operation wherein said mixture with high concentration of pyromellitic dianhydride is mixed with said recycled PET material to obtain the thermoplastic material to be extruded.

9. A multilayer film made according to one of the previous claims.

10. The multilayer film according to claim 9, **characterized in that** the two outer layers constitute 5 to 20% by weight of the total of the multilayer film, and the inner layer constitutes 80 to 95% by weight of the total of the multilayer film.

11. An article comprising a multilayer film according to claim 9 or 10.

12. The article according to claim 11, **characterized in that** it is a tray or container produced by a thermoforming process of the film.

## Patentansprüche

1. Verfahren zur Herstellung durch Extrusion eines Mehrschichtfilms, der aus mindestens drei Schichten besteht, von denen zwei Außenschichten aus Virgin-PET oder einem Virgin-Copolymer davon bestehen; wobei eine Innenschicht dieses Mehrschichtfilms anhand der folgenden Abfolge hergestellt wird:
- einem Mischschritt, bei dem das recycelte PET-Material mit einem Additiv gemischt wird, um ein zu extrudierendes thermoplastisches Material zu erhalten; wobei das recycelte PET-Material mit einer nach ASTM D 4603-86 gemessenen intrinsischen Viskosität von weniger als 0,80 dl/g zu mindestens 50 Gew.-% aus Recyclingverfahren stammt und PET oder ein Copolymer davon enthält;
- einem Extrusionsschritt, bei dem das thermoplastische Material einer Extrusion bei einer Temperatur von weniger als 300 °C unterzogen wird;
- einen Rückgewinnungs- und Abkühlungsschritt, bei dem ein aus dem Extruder austretender Film zurückgewonnen und abgekühlt wird;
wobei das Additiv pyromellitisches Dianhydrid ist;
wobei das Verfahren **dadurch gekennzeichnet ist, dass** das pyromellitische Dianhydrid in einer Menge im Bereich von 0,002 bis 0,150 Gew .-% bezogen auf das Gesamtgewicht des zu extrudierenden thermoplastischen Materials zugesetzt wird; wobei der aus dem Extruder austretende Mehrschichtfilm eine nach ASTM D 4603-86 gemessenen intrinsischen Viskosität aufweist, die geringer ist als gewichtete intrinsische Viskosität von eingehendem PET-Material.

2. Verfahren nach Anspruch 1, **dadurch gekennzeichnet, dass** das thermoplastische Material aus PET oder einem Copolymer davon besteht, die zu mindestens 80 Gew .-% aus Recyclingverfahren stammen.

3. Verfahren nach Anspruch 1, **dadurch gekennzeichnet, dass** das thermoplastische Material aus PET oder einem Copolymer davon besteht, die vollständig aus Recyclingverfahren stammen.

4. Verfahren nach einem der vorstehenden Ansprüche, **dadurch gekennzeichnet, dass** das PET-Copolymer als Comonomer Diethylenglykol (DEG) und/oder Cyclohexanedimethanol (CHDM) und/oder Isophthalsäure (IPA) und/oder Naphthalinsäure (NDC) aufweist.

5. Verfahren nach einem der vorstehenden Ansprüche, **dadurch gekennzeichnet, dass** das pyromellitische Dianhydrid in einer Menge im Bereich von 0,03 bis 0,15 Gew .-% bezogen auf das Gesamtgewicht des thermoplastischen Materials vorliegt.

6. Verfahren nach einem der vorstehenden Ansprüche, **dadurch gekennzeichnet, dass** das recycelte PET-Material eine nach ASTM D 4603-86 gemessene intrinsische Viskosität im Bereich von 0,5 bis 0,78 dl/g aufweist.

7. Verfahren nach einem der vorstehenden Ansprüche, **dadurch gekennzeichnet, dass** das thermoplastische Material einen anorganischen Füllstoff und/oder einen organischen Füllstoff und/oder andere Polymere als PET oder ein Copolymer davon aufweist.

8. Verfahren nach einem der vorstehenden Ansprüche, **dadurch gekennzeichnet, dass** der Mischschritt umfasst:
- einen ersten Mischvorgang, bei dem das pyromellitische Dianhydrid mit einer Polymermatrix oder einer Stützflüssigkeit gemischt wird, wodurch eine Mischung mit einer hohen Konzentration von pyromellitischem Dianhydrid erhalten wird, und
- einen zweiten Mischvorgang, bei dem die Mischung mit hoher Konzentration von pyromellitischem Dianhydrid mit dem recycelten PET-Material gemischt wird, um das zu extrudierende thermoplastische Material zu erhalten.

9. Mehrschichtfilm hergestellt nach einem der vorstehenden Ansprüche.

10. Mehrschichtfilm nach Anspruch 9, **dadurch gekennzeichnet, dass** die zweiten Außenschichten 5 bis 20 Gew.-% des gesamten Mehrschichtfilms ausmachen und die Innenschicht 80 bis 95 Gew.-% des gesamten Mehrschichtfilms ausmacht.

11. Artikel, der einen Mehrschichtfilm nach Anspruch 9 oder 10 aufweist.

12. Artikel nach Anspruch 11, **dadurch gekennzeichnet, dass** es sich um eine Schale oder einen Behälter handelt, die/der mittels eines Thermoformungsverfahrens des Films hergestellt werden.

## Revendications

1. Procédé pour la production par extrusion d'un film multicouche composé d'au moins trois couches parmi lesquelles deux couches extérieures sont constituées de PET vierge ou d'un copolymère vierge de celui-ci ; une couche intérieure dudit film multicouche étant produit par la séquence suivante :
- une étape de mélange, dans laquelle du matériau PET recyclé est mélangé avec un additif pour obtenir un matériau thermoplastique à extruder; ledit matériau PET recyclé ayant une viscosité intrinsèque, mesurée conformément à la norme ASTM D 4603-86, inférieure à 0,80 dl/g, dérivant, pour au moins 50 % en poids, de traitements de recyclage et comprenant du PET ou un copolymère de celui-ci ;
- une étape d'extrusion, dans laquelle ledit matériau thermoplastique subit une extrusion à une température inférieure à 300°C ;
- une étape de récupération et de refroidissement, dans laquelle un film sortant de l'extrudeuse est récupéré et refroidi ;
ledit additif étant le dianhydride pyromellitique ;
ledit procédé étant **caractérisé en ce que** ledit dianhydride pyromellitique est ajouté en une quantité située dans la plage allant de 0,002 % à 0,150 % en poids par rapport au poids total dudit matériau thermoplastique à extruder ; ledit film multicouche sortant de l'extrudeuse ayant une viscosité intrinsèque, mesurée conformément à la norme ASTM D 4603-86, inférieure à la viscosité intrinsèque pondérée du matériau PET entrant.

2. Procédé selon la revendication 1, **caractérisé en ce que** le matériau thermoplastique est constitué de PET ou d'un copolymère de celui-ci dérivant, pour au moins 80 % en poids, de traitements de recyclage.

3. Procédé selon la revendication 1, **caractérisé en ce que** le matériau thermoplastique est constitué de PET ou d'un copolymère de celui-ci dérivant entièrement de traitements de recyclage.

4. Procédé selon l'une des revendications précédentes, **caractérisé en ce que** le copolymère de PET comprend, en tant que comonomère, du diéthylèneglycol (DEG) et/ou du cyclohexanediméthanol (CHDM) et/ou de l'acide isophtalique (IPA) et/ou de l'acide naphtalénique (NDC).

5. Procédé selon l'une des revendications précédentes, **caractérisé en ce que** le dianhydride pyromellitique est présent en une quantité située dans la plage allant de 0,03 à 0,15 % en poids par rapport au poids total du matériau thermoplastique.

6. Procédé selon l'une des revendications précédentes, **caractérisé en ce que** ledit matériau PET recyclé a une viscosité intrinsèque, mesurée conformément à la norme ASTM D 4603-86, située dans la plage allant de 0,5 à 0,78 dl/g.

7. Procédé selon l'une des revendications précédentes, **caractérisé en ce que** ledit matériau thermoplastique comprend une charge inorganique et/ou une charge organique et/ou des polymères différents du PET ou d'un copolymère de celui-ci.

8. Procédé selon l'une des revendications précédentes, **caractérisé en ce que** ladite étape de mélange comprend
- une première opération de mélange dans laquelle ledit dianhydride pyromellitique est mélangé avec une matrice polymère ou un liquide support, en obtenant ainsi un mélange ayant une concentration élevée de dianhydride pyromellitique, et
- une deuxième opération de mélange dans laquelle ledit mélange ayant une concentration élevée de dianhydride pyromellitique est mélangé avec ledit matériau PET recyclé pour obtenir le matériau thermoplastique à extruder.

9. Film multicouche produit selon l'une des revendications précédentes.

10. Film multicouche selon la revendication 9, **caractérisé en ce que** les deux couches extérieures constituent 5 à 20 % en poids du total du film multicouche, et la couche intérieure constitue 80 à 95 % en poids du total du film multicouche.

11. Article comprenant un film multicouche selon la revendication 9 ou 10.

12. Article selon la revendication 11, **caractérisé en ce qu'**il s'agit d'un plateau ou d'un récipient produit par un procédé de thermoformage du film.
